# DEMANDE DE BREVET EUROPEEN

(11) **EP 1 447 418 A1**
(43) Date de publication de la demande: **18.08.2004**
(21) Numéro de dépôt: 04360010.5
(22) Date de dépôt: 10.02.2004
(51) Int. Cl.: C08G 18/12, C08G 18/76, C08G 18/48

(54) **Produit bi-composant**

(30) Priorité: 12.02.2003 FR 0301686
(71) Demandeur: A. WEBER, S.A., F-57520 Rouhling (FR)
(72) Inventeur: Weber, Franck, 57520 Rouhling (FR)
(74) Mandataire: Nuss, Pierre

(57) **Abrégé**

La présente invention concerne un produit bi-composant caractérisé en ce qu'il est à base de pré-polymère de méthylène-diphényldiisocyanate et d'un polyol à fonctionnalité multiple et présente une température de réaction faible, inférieure à 130°C, en toutes conditions d'utilisation, un temps de polymérisation court, une expansion limitée au maximum à cinq fois l'expansion initiale, une contrainte mécanique au collage supérieure à 1 Mpa atteinte après une durée pouvant aller de trente minutes à 5 heures, une faible viscosité pour un système pré-polymérisé inférieur à 800 m.Pa.s à 25°C et ne développant pas de fissuration significative due aux contraintes internes, en cours de polymérisation.

L'invention est plus particulièrement applicable dans le domaine de la consolidation de terrains en exploitation minière et dans les travaux publics.

## Description

La présente invention concerne plus particulièrement le domaine de la consolidation de terrains en exploitation minière et dans les travaux publics et a pour objet un produit à base d'un pré-polymère de méthylène diphényl diisocyanate (MDI) et d'un polyol à fonctionnalité multiple.

Les caractéristiques de ces produits de consolidation sont évaluées par différents tests permettant de déterminer leur niveau de sécurité lors de leur utilisation en milieu souterrain.

Actuellement, dans le cadre de l'exploitation minière, et notamment de celle du charbon, il est couramment fait appel, dans la formulation de produits de consolidation ou d'étanchement, à des produits organiques, parmi lesquels figurent des polyuréthannes. La plupart de ces produits permettent, certes, de satisfaire à leur objectif essentiel, mais présentent tous l'inconvénient d'être inflammables ou encore d'avoir des températures de réactions pouvant être plus élevées que les températures d'auto-inflammmation du charbon.

Un autre inconvénient de ces produits connus est leur sensibilité à l'eau, qui augmente la température de réaction de manière significative, ainsi que le taux d'expansion du produit polymérisé. Il en résulte un risque d'inflammation du charbon plus élevé, ainsi qu'une forte diminution du pouvoir collant.

La présente invention a pour but de pallier ces inconvénients en proposant un produit bi-composant destiné à la consolidation des terrains, et mis en oeuvre par injection et présentant des caractéristiques particulièrement intéressantes par rapport aux polyuréthannes expansés classiques utilisés dans ce domaine.

A cet effet le produit bi-composant est caractérisé en ce qu'il est à base de pré-polymère de méthylène-diphényl-diisocyanate et d'un polyol à fonctionnalité multiple et présente une température de réaction faible, inférieure à 130°C, en toutes conditions d'utilisation, un temps de polymérisation court, une expansion limitée au maximum à cinq fois l'expansion initiale, une contrainte mécanique au collage supérieure à 1 Mpa atteinte après une durée pouvant aller de trente minutes à 5 heures, une faible viscosité pour un système pré-polymérisé inférieur à 800 m.Pa.s à 25°C et ne développant pas de fissuration significative due aux contraintes internes, en cours de polymérisation.

De préférence, les composants du produit sont mélangés dans un rapport de un pour un.

Le temps de polymérisation peut aller jusqu'à cinq minutes à 30°C et est préférentiellement de l'ordre d'une à deux minutes.

Les tests de contrainte mécanique sont effectués sur des barreaux représentatifs en pierre ou en béton, d'une dimension de 160 mm x 40 mm x 40 mm, ces barreaux étant préalablement cassés en leur centre, conditionnés à 30°C, à un taux d'humidité relative de 85%, puis recollés avec un joint de 3 mm du produit considéré et testé en flexion trois points après le temps de polymérisation à 30°C. Les systèmes classiques à base de méthylène-diphényl-diisocyanate connus ne comportent pas simultanément l'ensemble de ces six caractéristiques.

Selon une autre caractéristique de l'invention, le composant à base de polyols peut être pourvu d'un additif tel qu'un organo-silane destiné à favoriser l'adhésion, en particulier sur tout support minéral.

Le composant à base de polyols utilise des polyols à fonctionnalité multiple permettant d'obtenir les six caractéristiques et l'ajout d'un fluidifiant permet d'ajuster la viscosité de ce composant. Ce composant à base de polyols comporte essentiellement des triols en mélange de masses moléculaires différentes, des tétrols, des polyols à haute fonctionnalité multiple de masse moléculaire, fonctionnalité, indice OH et viscosité spécifiques et des polyols aminés, ainsi que des accélérateurs, tels que, par exemple, du dibutyldilaurate d'étain.

Selon une autre caractéristique de l'invention, le pré-polymère de méthylène-diphényl-diisocyanate est obtenu à partir de diols linéaires et comporte un indice N=C=O compris entre 18 et 24 et de préférence de 22. Par ailleurs, le composé à base de méthylène-diphényl-diisocyanate peut être additionné de fluidifiants, tels que du carbonate de propylène ou du dioctyl-adipate. Il en résulte que la viscosité du système peut être abaissée à une valeur inférieure à 800 m.Pa.s.

En outre, le produit conforme à l'invention peut être additionné d'un anti-mousse composé, par exemple, de tensio-actifs non ioniques et d'insaponifiables. Un tel anti-mousse permet de maintenir l'expansion en dessous de la valeur maximale de cinq fois le volume initial.

L'utilisation de molécules réactives avec l'eau, formant un piège à eau, telles du 3-éthyl-2-méthyl-2-(3-méthylbutyl)-1,3-oxazolidine, permet aussi de réduire l'expansion.

Il est également possible de pourvoir le produit bi-composant d'ignifugeants, tels que du tri-éthyl-phosphate ou du tri-méthyl-chloro-phosphate. L'ajout d'un ignifugeant permet, dans certaines applications, d'améliorer encore les caractéristiques de résistance au feu.

Enfin, le produit bi-composant peut être muni, en outre, d'agents de rigidité, tels que di ou tri-éthyl-glycol ou méthyl-éthyl-glycol.

Selon une caractéristique de l'invention, les fluidifiants et ignifugeants peuvent être utilisés en addition, seuls ou en mélange.

Le produit bi-composant conforme à l'invention présente avantageusement la composition suivante :
- pré-polymère de méthylène-diphényl-diisocyanate obtenu de préférence par réticulation partielle à l'aide de diols linéaires 80 % à 95 %
- fluidifiants, tels que du carbonate de propylène ou du dioctyl-adipate 0 % à 15 %
- ignifugeants, tels que du tri-éthyl-phosphate ou du tri-méthyl-chloro-phosphate 0 % à 15 %
- triols en mélange de masses moléculaires différentes 70 % à 80 %
- tétrols 0 % à 14 %
- polyols à haute fonctionnalité 0 % à 10 %
- polyols aminés 0 % à 10 %
- accélérateurs tel que par exemple du
- dibutyldilaurate d'étain 0,05 % à 1 %
- anti-mousse composé de tensio-actifs non
- ioniques et d'insaponifiables 0,5 % à 1 %
- fluidifiant tel que du dioctyladipate 0 % à 10 %
- agents de rigidité tels que di ou tri-éthyl-glycol ou méthyl-éthyl-glycol 0 % à 3 %
- eau 0 % à 1 %

A titre d'exemple, le produit bi-composant présente la formulation préférentielle suivante :
- pré-polymère de méthylène-diphényl-diisocyanate d'indice N=C=O 22,5 obtenu par réticulation partielle à l'aide de diols linéaires de masse moléculaire 1000 et d'une faible partie de tri-éthyl-glycol 87 %
- fluidifiants tels que du carbonate de propylène ou du dioctyl-adipate 5 %
- ignifugeant tels que du tri-éthyl-phosphate ou du tri-méthyl-chloro-phosphate 8 %
- triol de masse moléculaire 3000 et d'indice
- OH de 55 mg K OH/g 45 %
- triol de masse moléculaire 700 et d'indice
- OH de 250 mg K OH/g 35 %
- tétrols de masse moléculaire 450 et d'indice OH de 446 mg K OH/g 8 %
- polyols à haute fonctionnalité 0 %
- polyols aminés de masse moléculaire 280 et d'indice OH de 800 mg K OH/g 6 %
- accélérateurs tel que par exemple du dibutyldilaurate d'étain 0,05 %
- anti-mousse composé de tensio-actifs non ioniques et d'insaponifiables 0,5 %
- fluidifiant tel que du dioctyladipate 5 %
- agents de rigidité tels que di ou tri-éthyl-glycol ou méthyl-éthyl-glycol 0,25 %
- eau 0,2 %

La diminution du nombre de groupements réactifs du méthylène-diphényl-diisocyanate par pré-polymérisation industrielle est nécessaire pour assurer une température maximale de réaction inférieure à 130°C, en limitant le nombre de calories produites par les réactions entre groupements réactifs (N=C=O) et les groupements susceptibles de réagir, tels que les fonctions alcool (OH), acide (COOH), amine (NH2). En outre l'eau réagit fortement avec le méthylène-diphényl-diisocyanate pour former entre autre du dioxyde de carbone, provoquant ainsi une expansion du produit et une forte exothermie.

L'utilisation en faible pourcentage de polyols à courte chaîne tel que di ou tri-éthyl-glycol, méthyl-éthyl-glycol ou glycérol utilisé lors de la fabrication du pré-polymère de méthylène-diphényl-diisocyanate permet d'augmenter la ramification, donc la rigidité du produit final, sans en augmenter de façon significative la viscosité.

Il est également possible de limiter le nombre de sites réactifs N=C=O par mélange d'un pré-polymère de méthylène-diphényl-diisocyanate d'indice N=C=O inférieur à 18 et d'un méthylène-diphényl-diisocyanate non pré-polymérisé d'indice N=C=O supérieur à 30.

Par ailleurs, le rapport volumétrique de un pour un peut être modifié par diminution du volume de méthylène-diphényl-diisocyanate ou de pré-polymère de méthylène-diphényl- diisocyanate par rapport au volume de polyols, afin de diminuer le nombre de sites réactifs N=C=O.

Le choix des polyols est optimisé pour garantir les caractéristiques mécaniques, les caractéristiques thermiques et d'adhésion et les caractéristiques de viscosités.

Ainsi, pour garantir les caractéristiques mécaniques, on préférera des polyols à fonctionnalité supérieure à deux, à des polyols linéaires. Du fait que l'on diminue le nombre de sites réactifs par rapport aux polyuréthannes classiquement utilisés, les propriétés mécaniques sont maintenues en travaillant sur l'assemblage de différents polyols à structures ramifiées.

Pour ce qui concerne les caractéristiques thermiques et d'adhésion, on limitera le nombre de sites susceptibles de réagir avec les groupements N=C=O de préférence entre 200 et 280 mg K OH/g, tout en conservant un rapport (index N=C=O) entre groupement N=C=O et groupement susceptible de réagir (équivalent OH) supérieur à 1 (de préférence situé entre 1,1 et 1,4), afin de garder suffisamment de groupements réactifs (N=C=O) pour permettre une bonne adhésion au support.

Par ailleurs, la viscosité des polyols étant liée à leur taille moléculaire et à leurs fonctionnalités, les polyols à poids moléculaire élevé seront généralement plus visqueux que les polyols à poids moléculaire faible et, de même, les polyols à fonctionnalité élevée seront généralement plus visqueux que les polyols à fonctionnalité faible.

L'utilisation de certains catalyseurs aminés ou de polyols aminés favorise les réactions entre MDI et polyols par rapport aux réactions MDI et eau, permettant ainsi de maîtriser en partie les réactions parasites en présence d'eau. Cependant, un excès de catalyseurs ou de polyols aminés peut favoriser l'apparition de fissures dans le produit final.

La mise en oeuvre de catalyseurs de trimérisation (réaction entre les groupements N=C=O), tel que, par exemple, l'acétate de potassium, permet d'améliorer les caractéristiques mécaniques du produit en terme de rigidité. Ces réactions étant très exothermiques, l'emploi de ces catalyseurs sera modéré ou différé (catalyseur à effet retardé) pour préserver une température maximale de polymérisation en dessous de 130°C.

L'utilisation d'un anti-mousse permet de limiter l'expansion lorsque le produit rencontre une quantité d'eau non maîtrisée (injection dans le terrain), en provoquant un effondrement de la mousse ou collapsage, par modification de la tension de surface. D'autres substances favorisent également cet effet, par exemple les huiles de ricin, de colza ou la paraffine chlorée. La limitation de l'expansion permet de maintenir des caractéristiques mécaniques correctes et de diminuer fortement le risque de fissuration et donc d'échauffement lié à un éventuel passage d'air.

Par ailleurs, la mise en oeuvre de catalyseur de réaction, tel que par exemple le dibutyldilaurate d'étain ou le 1,4-diazabicyclo (2,2,2) octane permet d'ajuster le temps de prise du produit (inférieur à 5 minutes à 30°C) et ainsi l'injection et le maintien du produit dans les fissures, mêmes verticales. La gestion de la vitesse de réaction et du nombre maximal de réactions susceptibles de se produire pendant un laps de temps donné, permettent de gérer la température maximale de polymérisation.

Enfin, l'utilisation d'un faible pourcentage d'eau, à savoir de 0 % à 0,5 % permet de garantir une expansion minimale assurant un bon remplissage de la fissuration tout en conservant de bonnes propriétés mécaniques.

Le produit, objet de la présente invention, est destiné à être utilisé plus particulièrement dans le domaine de l'exploitation minière et des travaux publics pour la consolidation des terrains ou du charbon et l'étanchement à l'air et au gaz, notamment par injection.

Bien entendu, l'invention n'est pas limitée au mode de réalisation décrit. Des modifications restent possibles, notamment du point de vue de la composition et des composantes du produit, ou par substitution d'équivalents techniques ou chimiques, sans sortir pour autant du domaine de protection de l'invention.

## Revendications

1. Produit bi-composant **caractérisé en ce qu'**il est à base de pré-polymère de méthylène-diphényl-diisocyanate et d'un polyol à fonctionnalité multiple et présente une température de réaction faible, inférieure à 130°C, en toutes conditions d'utilisation, un temps de polymérisation court, une expansion limitée au maximum à cinq fois l'expansion initiale, une contrainte mécanique au collage supérieure à 1 Mpa atteinte après une durée pouvant aller de trente minutes à 5 heures, une faible viscosité pour un système pré-polymérisé inférieur à 800 m.Pa.s à 25°C et ne développant pas de fissuration significative due aux contraintes internes, en cours de polymérisation.

2. Produit, suivant la revendication 1, **caractérisé en ce que** les composants sont mélangés dans un rapport de un pour un.

3. Produit, suivant la revendication 1, **caractérisé en ce que** sa polymérisation peut aller jusqu'à cinq minutes à 30°C et est de l'ordre d'une à deux minutes.

4. Produit, suivant la revendication 1, **caractérisé en ce que** le composant à base de polyols est pourvu d'un additif tel qu'un organo-silane.

5. Produit, suivant la revendication 1, **caractérisé en ce que** le composant à base de polyols utilise des polyols à fonctionnalité multiple.

6. Produit, suivant l'une quelconque des revendications 1 et 5, **caractérisé en ce que** le composant à base de polyols comporte essentiellement des triols en mélange de masses moléculaires différentes, des tétrols, des polyols à haute fonctionnalité multiple de masse moléculaire, fonctionnalité, indice OH et viscosité spécifiques et des polyols aminés.

7. Produit, suivant l'une quelconque des revendications 1, 5 et 6, **caractérisé en ce que** le composant à base de polyols comporte des accélérateurs, tels que, par exemple, du dibutyldilaurate d'étain.

8. Produit, suivant la revendication 1, **caractérisé en ce que** le pré-polymère de méthylène-diphényl-diisocyanate est obtenu à partir de diols linéaires et comporte un indice N=C=O compris entre 18 et 24 et de préférence de 22.

9. Produit, suivant la revendication 1, **caractérisé en ce que** le composé à base de méthylène-diphényl-diisocyanate est additionné de fluidifiants, tels que du carbonate de propylène ou du dioctyl-adipate.

10. Produit, suivant la revendication 1, **caractérisé en ce qu'**il est additionné d'un anti-mousse composé, par exemple, de tensio-actifs non ioniques et d'insaponifiables.

11. Produit, suivant la revendication 1, **caractérisé en ce qu'**il est pourvu d'ignifugeants, tels que du tri-éthyl-phosphate ou du tri-méthyl-chloro-phosphate.

12. Produit, suivant la revendication 1, **caractérisé en ce qu'**il est muni, en outre, d'agents de rigidité, tels que di ou tri-éthyl-glycol ou méthyl-éthyl-glycol.

13. Produit, suivant l'une quelconque des revendications 9 et 11, **caractérisé en ce que** les fluidifiants et ignifugeants sont utilisés en addition, seuls ou en mélange.

14. Produit, suivant l'une quelconque des revendications 1 à 13, **caractérisé en ce qu'**il présente la composition suivante :
- pré-polymère de méthylène-diphényl-diisocyanate obtenu de préférence par réticulation partielle à l'aide de diols linéaires 80 % à 95 %
- fluidifiants, tels que du carbonate de propylène ou du dioctyl-adipate 0 % à 15 %
- ignifugeants, tels que du tri-éthyl-phosphate ou du tri-méthyl-chloro-phosphate 0 % à 15 %
- triols en mélange de masses moléculaires différentes 70 % à 80 %
- tétrols 0 % à 14 %
- polyols à haute fonctionnalité 0 % à 10 %
- polyols aminés 0 % à 10 %
- accélérateurs tel que par exemple du dibutyldilaurate d'étain 0,05 % à 1 %
- anti-mousse composé de tensio-actifs non ioniques et d'insaponifiables 0,5 % à 1 %
- fluidifiant tel que du dioctyladipate 0 % à 10 %
- agents de rigidité tels que di ou tri-éthyl-glycol ou méthyl-éthyl-glycol 0 % à 3 %
- eau 0 % à 1 %

15. Produit, suivant la revendication 14, **caractérisé en ce qu'**il présente la formulation préférentielle suivante :
- pré-polymère de méthylène-diphényl-diisocyanate d'indice N=C=O 22,5 obtenu par réticulation partielle à l'aide de diols linéaires de masse moléculaire 1000 et d'une faible partie de tri-éthyl-glycol 87 %
- fluidifiants tels que du carbonate de propylène ou du dioctyl-adipate 5 %
- ignifugeant tels que du tri-éthyl-phosphate ou du tri-méthyl-chloro-phosphate 8 %
- triol de masse moléculaire 3000 et d'indice OH de 55 mg K OH/g 45 %
- triol de masse moléculaire 700 et d'indice OH de 250 mg K OH/g 35 %
- tétrols de masse moléculaire 450 et d'indice OH de 446 mg K OH/g 8 %
- polyols à haute fonctionnalité 0 %
- polyols aminés de masse moléculaire 280 et d'indice OH de 800 mg K OH/g 6 %
- accélérateurs tel que par exemple du dibutyldilaurate d'étain 0,05 %
- anti-mousse composé de tensio-actifs non ioniques et d'insaponifiables 0,5 %
- fluidifiant tel que du dioctyladipate 5 %
- agents de rigidité tels que di ou tri-éthyl-glycol ou méthyl-éthyl-glycol 0,25 %
- eau 0,2 %.

16. Produit, suivant l'une quelconque des revendications 1 et 8, **caractérisé en ce qu'**un pré-polymère de méthylène-diphényl-diisocyanate d'indice N=C=O inférieur à 18 est mélangé à un méthylène-diphényl-diisocyanate non pré-polymérisé d'indice N=C=O supérieur à 30, afin de limiter le nombre de sites réactifs N=C=O.

17. Produit, suivant l'une quelconque des revendications 1, 2, 8 et 16, **caractérisé en ce que** le volume de méthylène-diphényl-diisocyanate ou de pré-polymère de méthylène-diphényl-diisocyanate par rapport au volume de polyols est diminué, afin de diminuer le nombre de sites réactifs N=C=O et de modifier le rapport volumétrique de un pour un.
